# EUROPEAN PATENT APPLICATION

(11) **EP 4 380 131 A1**
(43) Date of publication of application: **05.06.2024**
(21) Application number: 22851924.5
(22) Date of filing: 21.07.2022
(51) Int. Cl.: H04L 47/10

(54) **METHOD AND APPARATUS FOR ACQUIRING EDGE SERVICE**

(30) Priority: 06.08.2021 CN 202110904355
(71) Applicant: Huawei Technologies Co., Ltd., Shenzhen, Guangdong 518129 (CN)
(72) Inventor: WEI, Xinpeng, Shenzhen, Guangdong 518129 (CN); ZHU, Fenqin, Shenzhen, Guangdong 518129 (CN)
(74) Representative: Gill Jennings & Every LLP
(86) International application number: PCT/CN2022/107148
(87) International publication number: WO 2023/011210

(57) **Abstract**

This application provides an edge service obtaining method and apparatus. The method includes: A server discovery function network element receives a plurality of DNS response messages sent by a DNS server, where the plurality of DNS response messages includes address information of EASs to be queried by a terminal device; and determines, based on first indication information, to send a DNS information report to a first core network element once for the plurality of DNS response messages. Signaling overheads generated when the server discovery function network element sends the DNS information report to the first core network element are reduced, to reduce signaling overheads in a process of obtaining an edge service.

## Description

This application claims priority to Chinese Patent Application No. 202110904355.3, filed with the China National Intellectual Property Administration on August 6, 2021 and entitled "EDGE SERVICE OBTAINING METHOD AND APPARATUS", which is incorporated herein by reference in its entirety.

### TECHNICAL FIELD

This application relates to the communication field, and more specifically, to an edge service obtaining method and apparatus.

### BACKGROUND

To use an edge service, a terminal device first needs to obtain address information of an edge application server (edge application server, EAS) by using a DNS-based service discovery mechanism. Currently, the terminal device performs the following steps to obtain the address information of the EAS. The terminal device sends a DNS query request including identification information of the EAS to an edge application server discovery function (edge application server discovery function, EASDF) network element, to obtain the address information of the EAS. The EASDF sends the DNS query request to a DNS server to obtain a DNS response corresponding to the service, and sends a DNS information report to an SMF based on the response, and accordingly the SMF completes establishment of a data plane path of the terminal device. Finally, the EASDF sends the DNS response including the address information of the EAS to the terminal device.

In a current network service, a same edge service may involve more than one piece of EAS identification information. Therefore, when accessing a service, a terminal device sends a plurality of DNS query requests, and an EASDF sends the plurality of DNS query requests to a DNS server and receives a plurality of DNS responses. The plurality of DNS responses may trigger the EASDF to send a plurality of DNS information reports to an SMF, and accordingly the SMF completes establishment of a data plane path of the terminal device. Because EASs in the returned DNS responses usually belong to a same data network (data network, DN), the SMF only needs to complete establishment of a data plane path of the terminal device once. Therefore, an existing edge service obtaining method may cause a waste of signaling resources.

### SUMMARY

This application provides an edge service obtaining method and apparatus, to reduce signaling overheads in a process of obtaining an edge service.

According to a first aspect, an edge service obtaining method is provided. The method includes: receiving, by a server discovery function network element, a plurality of DNS response messages sent by a DNS server, where the plurality of DNS response messages include address information of EASs to be queried by a terminal device; and determining, by the server discovery function network element based on first indication information, to send a DNS information report to a first core network element once for the plurality of DNS response messages.

According to the method provided in this embodiment of this application, the server discovery function network element may receive a plurality of DNS response messages including address information of a plurality of EASs that corresponds to a same data network. The server discovery function network element may determine, based on the first indication information, to send a DNS information report to the first core network element only once for the plurality of DNS response messages. This can reduce signaling overheads generated when the address information of the plurality of EASs is queried.

With reference to the first aspect, in some implementations of the first aspect, the first core network element is a session management function network element, and the server discovery function network element is an edge application server discovery function network element.

With reference to the first aspect, in some implementations of the first aspect, the first indication information includes correspondence information between a network address and identification information of a data network. The server discovery function network element determines, based on the first indication information and the address information of the EASs in the plurality of DNS response messages, that the EASs to be queried correspond to same data network identification information; and the server discovery function network element reports, to the first core network element once, a DNS information report corresponding to one of the plurality of DNS response messages.

With reference to the first aspect, in some implementations of the first aspect, the server discovery function network element buffers the plurality of DNS response messages; the server discovery function network element receives second indication information sent by the first core network element, where the second indication information includes a handling rule for the plurality of DNS response messages; and the server discovery function network element determines, based on the second indication information, to send the plurality of DNS response messages to the terminal device.

With reference to the first aspect, in some implementations of the first aspect, before the server discovery function network element receives the plurality of DNS response messages sent by the DNS server, the method further includes: receiving, by the server discovery function network element, the first indication information sent by the first core network element.

With reference to the first aspect, in some implementations of the first aspect, the identification information of the data network includes at least one of the following information:
a data network access identifier DNAI of the data network and a data network name DNN of the data network.

According to a second aspect, an edge service obtaining method is provided, where the method includes: sending, by a first core network element, first indication information to a server discovery function network element, where the first indication information indicates the server discovery function network element to send a DNS information report to the first core network element once for a plurality of DNS response messages, and the plurality of DNS response messages include address information of EASs to be queried by a terminal device; and receiving, by the first core network element, the DNS information report.

According to the method provided in this embodiment of this application, the server discovery function network element may receive a plurality of DNS query messages, and the plurality of DNS query messages may include identification information of a plurality of EASs that corresponds to a same data network. The server discovery function network element may determine, based on the third indication information, to send a DNS information report to the first core network element only once for the plurality of DNS query messages. This can reduce signaling overheads generated when address information of the plurality of EASs is queried.

With reference to the second aspect, in some implementations of the second aspect, the first indication information includes correspondence information between a network address and identification information of a data network.

With reference to the second aspect, in some implementations of the second aspect, the first core network element sends second indication information to the server discovery function network element, where the second indication information includes a handling rule for the plurality of DNS response messages, so that the server discovery function network element determines, based on the second indication information, to send the plurality of DNS response messages to the terminal device.

With reference to the second aspect, in some implementations of the second aspect, the identification information of the data network includes at least one of the following information:
a data network access identifier DNAI of the data network and a data network name DNN of the data network.

According to a third aspect, an edge service obtaining method is provided, where the method includes: receiving, by a server discovery function network element, a plurality of DNS query messages from a terminal device, where the plurality of DNS query messages are for querying address information of EASs; and determining, by the server discovery function network element based on third indication information, to send a DNS information report to a first core network element once for the plurality of DNS query messages.

With reference to the third aspect, in some implementations of the third aspect, the third indication information includes correspondence information between identification information of the EASs and identification information of a data network. The server discovery function network element determines, based on first indication information, that the plurality of DNS query messages correspond to same data network identification information; and the server discovery function network element reports, to the first core network element once, a DNS information report corresponding to one of the plurality of DNS query messages.

With reference to the third aspect, in some implementations of the third aspect, the server discovery function network element buffers the plurality of DNS query messages; the server discovery function network element receives fourth indication information from the first core network element, where the fourth indication information includes a handling rule for the plurality of DNS query messages; and the server discovery function network element determines, based on the fourth indication information, to send the plurality of DNS query messages to a DNS server.

With reference to the third aspect, in some implementations of the third aspect, the server discovery function network element receives the third indication information sent by the first core network element.

With reference to the third aspect, in some implementations of the third aspect, the identification information of the EASs includes at least one of the following information: uniform resource identifiers URIs of the EASs, instance identifiers of the EASs, or fully qualified domain names FQDNs of the EASs.

With reference to the third aspect, in some implementations of the third aspect, the identification information of the data network includes at least one of the following information: a data network access identifier DNAI and a data network name DNN.

According to a fourth aspect, an edge service obtaining method is provided, where the method includes: sending, by a first core network element, third indication information to a server discovery function network element, where the third indication information indicates the server discovery function network element to send a DNS information report to the first core network element once for a plurality of DNS query messages, and the plurality of DNS query messages are for querying address information of EASs; and receiving, by the first core network element, the DNS information report.

With reference to the fourth aspect, in some implementations of the fourth aspect, the third indication information includes correspondence information between identification information of the EASs and identification information of a data network.

With reference to the fourth aspect, in some implementations of the fourth aspect, the first core network element sends fourth indication information to the server discovery function network element, where the fourth indication information includes a handling rule for the plurality of DNS query messages, and the handling rule includes building a client subnet option for the plurality of DNS query messages.

With reference to the fourth aspect, in some implementations of the fourth aspect, the identification information of the EASs includes at least one of the following information: uniform resource identifiers URIs of the EASs, instance identifiers of the EASs, or fully qualified domain names FQDNs of the EASs.

With reference to the fourth aspect, in some implementations of the fourth aspect, the identification information of the data network includes at least one of the following information: a data network access identifier DNAI and a data network name DNN.

According to a fifth aspect, an edge service obtaining apparatus is provided, where the apparatus includes: a transceiver unit, where the transceiver unit is configured to receive a plurality of DNS response messages sent by a DNS server, where the plurality of DNS response messages include address information of EASs to be queried by a terminal device; and a processing unit, where the processing unit is configured to determine, based on first indication information, to send a DNS information report to a first core network element once for the plurality of DNS response messages.

With reference to the fifth aspect, in some implementations of the fifth aspect, the first core network element is a session management function network element.

With reference to the fifth aspect, in some implementations of the fifth aspect, the first indication information includes correspondence information between a network address and identification information of a data network. The processing unit is specifically configured to determine, based on the first indication information and the plurality of DNS response messages, that the EASs to be queried correspond to same data network identification information. The transceiver unit is specifically configured to report, to the first core network element once, a DNS information report corresponding to one of the plurality of DNS response messages.

With reference to the fifth aspect, in some implementations of the fifth aspect, the apparatus further includes a storage unit. The storage unit is configured to buffer the plurality of DNS response messages. The transceiver unit is specifically configured to receive second indication information sent by the first core network element, where the second indication information includes a handling rule for the plurality of DNS response messages. The processing unit is specifically configured to determine, based on the second indication information, to send the plurality of DNS response messages to the terminal device.

With reference to the fifth aspect, in some implementations of the fifth aspect, the transceiver unit is further configured to receive the first indication information sent by the first core network element.

With reference to the fifth aspect, in some implementations of the fifth aspect, the identification information of the data network includes at least one of the following information: a data network access identifier DNAI of the data network and a data network name DNN of the data network.

According to a sixth aspect, an edge service obtaining apparatus is provided, where the apparatus includes: a transceiver unit, configured to send first indication information to a server discovery function network element, where the first indication information indicates the server discovery function network element to send a DNS information report to a first core network element once for a plurality of DNS response messages, and the plurality of DNS response messages include address information of EASs to be queried by a terminal device. The transceiver unit is further configured to receive the DNS information report.

With reference to the sixth aspect, in some implementations of the sixth aspect, the first indication information includes correspondence information between a network address and identification information of a data network.

With reference to the sixth aspect, in some implementations of the sixth aspect, the transceiver unit is further configured to send second indication information to the server discovery function network element, where the second indication information includes a handling rule for the plurality of DNS response messages, so that the server discovery function network element determines, based on the second indication information, to send the plurality of DNS response messages to the terminal device.

With reference to the sixth aspect, in some implementations of the sixth aspect, the identification information of the data network includes at least one of the following information: a data network access identifier DNAI of the data network and a data network name DNN of the data network.

According to a seventh aspect, an edge service obtaining apparatus is provided, where the apparatus includes: a transceiver unit, configured to receive a plurality of DNS query messages from a terminal device, where the plurality of DNS query messages are for querying address information of EASs; and a processing unit, configured to determine, based on third indication information, to send a DNS information report to a first core network element once for the plurality of DNS query messages.

With reference to the seventh aspect, in some implementations of the seventh aspect, the third indication information includes correspondence information between identification information of the EASs and identification information of a data network. The processing unit is specifically configured to determine, based on first indication information, that the plurality of DNS query messages correspond to same data network identification information. The transceiver unit is further configured to report, to the first core network element once, a DNS information report corresponding to one of the plurality of DNS query messages.

With reference to the seventh aspect, in some implementations of the seventh aspect, the apparatus further includes a storage unit, configured to buffer the plurality of DNS query messages. The transceiver unit is further configured to receive fourth indication information sent by the first core network element, where the fourth indication information includes a handling rule for the plurality of DNS query messages. The processing unit is specifically configured to determine, based on the fourth indication information, to send the plurality of DNS query messages to a DNS server.

With reference to the seventh aspect, in some implementations of the seventh aspect, the transceiver unit is specifically configured to receive the third indication information sent by the first core network element.

With reference to the seventh aspect, in some implementations of the seventh aspect, the identification information of the EASs includes at least one of the following information: uniform resource identifiers URIs of the EASs, instance identifiers of the EASs, or fully qualified domain names FQDNs of the EASs.

With reference to the seventh aspect, in some implementations of the seventh aspect, the identification information of the data network includes at least one of the following information: a data network access identifier DNAI and a data network name DNN.

According to an eighth aspect, an edge service obtaining apparatus is provided. The apparatus includes: a transceiver unit, configured to send third indication information to a server discovery function network element, where the third indication information indicates the server discovery function network element to send a DNS information report to a first core network element once for a plurality of DNS query messages, and the plurality of DNS query messages are for querying address information of EASs. The transceiver unit is further configured to receive the DNS information report.

With reference to the eighth aspect, in some implementations of the eighth aspect, the third indication information includes correspondence information between identification information of the EASs and identification information of a data network.

With reference to the eighth aspect, in some implementations of the eighth aspect, the transceiver unit is further configured to send fourth indication information to the server discovery function network element, where the fourth indication information includes a handling rule for the plurality of DNS query messages, and the handling rule includes building a client subnet option for the plurality of DNS query messages.

With reference to the eighth aspect, in some implementations of the eighth aspect, the identification information of the EASs includes at least one of the following information: uniform resource identifiers URIs of the EASs, instance identifiers of the EASs, or fully qualified domain names FQDNs of the EASs.

With reference to the eighth aspect, in some implementations of the eighth aspect, the identification information of the data network includes at least one of the following information: a data network access identifier DNAI and a data network name DNN.

According to a ninth aspect, an edge service obtaining apparatus is provided. The apparatus may be a server discovery function network element, or the apparatus may be a chip. The apparatus has a function of implementing the server discovery function network element in any one of the first aspect, the third aspect, or the possible implementation of the first aspect or the third aspect. The function may be implemented by hardware, or may be implemented by hardware executing corresponding software. The hardware or the software includes one or more modules or units corresponding to the foregoing function.

According to a tenth aspect, an edge service obtaining apparatus is provided. The apparatus may be a first core network element, for example, a session management function network element, or the apparatus may be a chip. The apparatus has a function of implementing the first core network element in any one of the second aspect, the fourth aspect, or the possible implementation of the second aspect or the fourth aspect. The function may be implemented by hardware, or may be implemented by hardware executing corresponding software. The hardware or the software includes one or more modules or units corresponding to the foregoing function.

According to an eleventh aspect, an edge service obtaining apparatus is provided, and includes a processor. The processor is coupled to a memory, and may be configured to execute instructions in the memory, to implement a function of the server discovery function network element in any one of the first aspect, the third aspect, or the possible implementations of the first aspect or the third aspect. Optionally, the apparatus further includes the memory. Optionally, the apparatus further includes a communication interface, and the processor is coupled to the communication interface.

According to a twelfth aspect, an edge service obtaining apparatus is provided, and includes a processor. The processor is coupled to a memory, and may be configured to execute instructions in the memory, to implement a function of the second network element in any one of the second aspect, the fourth aspect, or the possible implementations of the second aspect or the fourth aspect. The second network element may be, for example, a mobility management network element. Optionally, the apparatus further includes the memory. Optionally, the apparatus further includes a communication interface, and the processor is coupled to the communication interface.

In an implementation, the apparatus is a first core network element, for example, an SMF. When the apparatus is an SMF, the communication interface may be a transceiver or an input/output interface.

In another implementation, the apparatus is a chip disposed in an SMF network element. When the apparatus is a chip disposed in an SMF network element, the communication interface may be an input/output interface.

Optionally, the transceiver may be a transceiver circuit. Optionally, the input/output interface may be an input/output circuit.

According to a thirteenth aspect, a processor is provided, including an input circuit, an output circuit, and a processing circuit. The processing circuit is configured to: receive a signal via the input circuit, and transmit a signal via the output circuit, so that the processor is enabled to perform the method according to any one of the first aspect to the fourth aspect or the possible implementations of the first aspect to the fourth aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by a receiver, a signal output by the output circuit may be output to a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a fourteenth aspect, an apparatus is provided, including a processor and a memory. The processor is configured to read instructions stored in the memory, and may receive a signal by using a receiver, and transmit a signal by using a transmitter, to perform the method according to any one of the first aspect to the fourth aspect or the possible implementations of the first aspect to the fourth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The apparatus in the fourteenth aspect may be a chip. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may exist independently of the processor.

According to a fifteenth aspect, a computer program product is provided. The computer program product includes a computer program (which may also be referred to as code or instructions). When the computer program is run, a computer is enabled to perform the method according to any one of the first aspect to the fourth aspect or the possible implementations of the first aspect to the fourth aspect.

According to a sixteenth aspect, a computer-readable medium is provided. The computer-readable medium stores a computer program (which may also be referred to as code or instructions). When the computer program is run on a computer, the computer is enabled to perform the method according to any one of the first aspect to the fourth aspect or the possible implementations of the first aspect to the fourth aspect.

According to a seventeenth aspect, a chip system is provided, including a processor, configured to invoke a computer program from a memory and run the computer program, so that a device on which the chip system is installed performs the method according to any one of the first aspect to the fourth aspect or the possible implementations of the first aspect to the fourth aspect.

### BRIEF DESCRIPTION OF DRAWINGS

FIG. 1 is a diagram of a system architecture to which an embodiment of this application is applicable;
FIG. 2 is a schematic diagram of an edge service architecture according to an embodiment of this application;
FIG. 3 is a schematic flowchart of an existing edge service obtaining method 300;
FIG. 4 is a schematic flowchart of an edge service obtaining method 400 according to this application;
FIG. 5 is a schematic flowchart of an edge service obtaining method 500 according to this application;
FIG. 6 is a schematic flowchart of an edge service obtaining method 600 according to this application;
FIG. 7 is a schematic flowchart of an edge service obtaining method 700 according to this application;
FIG. 8 is a schematic block diagram of an edge service obtaining apparatus 100 according to this application; and
FIG. 9 is a schematic block diagram of an edge service obtaining apparatus 200 according to this application.

### DESCRIPTION OF EMBODIMENTS

The following describes technical solutions of this application with reference to accompanying drawings.

A wireless communication system mentioned in embodiments of this application includes but is not limited to a global system for mobile communications (global system for mobile communications, GSM) system, a long term evolution (long term evolution, LTE) frequency division duplex (frequency division duplex, FDD) system, an LTE time division duplex (time division duplex, TDD) system, an LTE system, a long term evolution-advanced (LTE-Advanced, LTE-A) system, a next-generation communication system (for example, a 6G communication system), a system integrating a plurality of access systems, or an evolved system.

The technical solutions provided in this application may be further applied to machine type communication (machine type communication, MTC), long term evolution for machine to machine (LTE for M2M, LTE-M) communication, a device to device (device to device, D2D) network, a machine to machine (machine to machine, M2M) network, an internet of things (internet of things, IoT) network, or another network. The IoT network may include, for example, an internet of vehicles. Communication modes in the internet of vehicles system are collectively referred to as vehicle to X (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

A terminal device in embodiments of this application may include various access terminals, mobile devices, user terminals, or user apparatuses that have a wireless communication function. For example, the terminal device may be user equipment (user equipment, UE), such as a mobile phone (mobile phone), a tablet computer (Pad), a computer with a wireless transceiver function, a virtual reality (virtual reality, VR) terminal device, or an augmented reality (augmented reality, AR) terminal device. The terminal device may alternatively be a wireless terminal in industrial control (industrial control), a machine type communication (machine type communication, MTC) terminal, customer premise equipment (customer premise equipment, CPE), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device with a wireless communication function, another processing device, vehicle-mounted device, or wearable device connected to a wireless modem, a terminal device in a 5G network, or a terminal device in a future evolved public land mobile network (public land mobile network, PLMN).

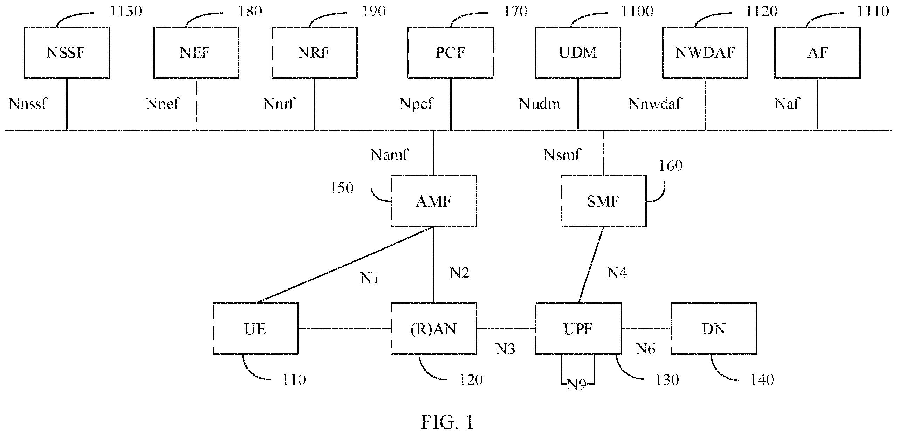

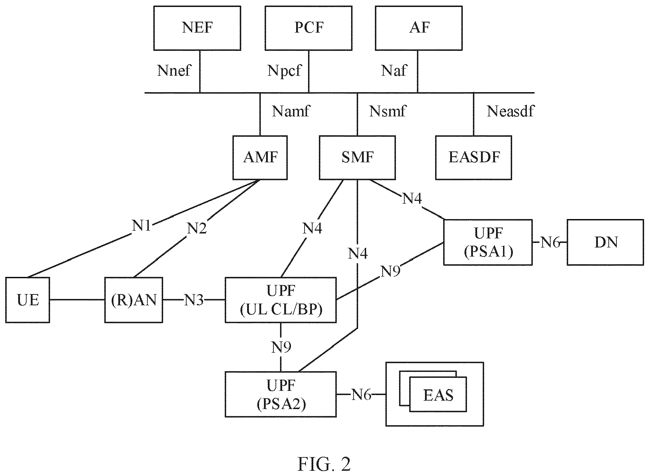

With reference to FIG. 1 and FIG. 2, the following describes in detail a network system architecture and an edge service architecture in the architecture in embodiments of this application.

FIG. 1 is a schematic block diagram of an example of a wireless communication system architecture to which this application is applicable. As shown in the figure, the system architecture may specifically include the following network elements:
1. (Radio) access network ((radio) access network, (R)AN): The RAN is an access network that implements a network access function based on a wireless communication technology. The radio access network can manage radio resources, provide an access service for a terminal, and further complete forwarding of a control signal and user data between a terminal and a core network.
   A radio access network device involved in this application may be a device with a wireless transceiver function. The radio access network device may be a device that provides a wireless communication function service, and is usually located on a network side. The radio access network device includes but is not limited to a next generation NodeB (gNodeB, gNB) in a 5th generation (5th generation, 5G) communication system, a next generation NodeB in a 6th generation (6th generation, 6G) mobile communication system, a base station in a future mobile communication system, an access node in a Wi-Fi system, an evolved NodeB (evolved NodeB, eNB) in an LTE system, a radio network controller (radio network controller, RNC), a NodeB (NodeB, NB), a base station controller (base station controller, BSC), a home NodeB (for example, a home evolved NodeB, or a home NodeB, HNB), a baseband unit (base band unit, BBU), a transmission reception point (transmission reception point, TRP), a transmitting point (transmitting point, TP), and a base transceiver station (base transceiver station, BTS). In a network structure, the access network device may include a central unit (central unit, CU) node, a distributed unit (distributed unit, DU) node, a RAN device including a CU node and a DU node, or a RAN device including a CU-control plane node, a CU-user plane node, and a DU node. The access network device may serve a cell. The user equipment communicates with a base station on a transmission resource (for example, a frequency domain resource, or referred to as a frequency spectrum resource) used for the cell. The cell may be a cell corresponding to the base station. The cell may belong to a macro base station, or a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to providing a high-speed data transmission service. The radio access network device may be a macro base station, may be a micro base station or an indoor base station, or may be a relay node or a donor node, a device that provides a wireless communication service for user equipment in a V2X communication system, a radio controller in a cloud radio access network (cloud radio access network, CRAN) scenario, a relay station, a vehicle-mounted device, a wearable device, a network device in a future evolved network, or the like. A specific technology and a specific device form that are used by the radio access network device are not limited in embodiments of this application.
2. User plane function network element (user plane function, UPF): configured to perform packet routing and forwarding, quality of service (quality of service, QoS) handling for user plane data, or the like. User data may be transmitted to a data network (data network, DN) through this network element.
3. Data network (data network, DN) 140: a network that performs data transmission.
4. Access and mobility management function network element (access and mobility management function, AMF): mainly used for mobility management, access management, and the like. The AMF is configured to implement functions, such as lawful interception or access authorization/authentication, other than session management in functions of a mobility management entity (mobility management entity, MME).
5. Session management function network element (session management function, SMF) 160: mainly used for session management, terminal devices' internet protocol (internet protocol, IP) address allocation and management, selection of a manageable user plane function, termination of interfaces toward policy control and charging functions, downlink data notification, and the like.
6. Network exposure function network element (network exposure function, NEF) 180: mainly configured to securely expose services, capabilities, and the like provided by a 3rd Generation Partnership Project (3GPP) network function.
7. Policy control function network element (policy control function, PCF): a unified policy framework to govern network behavior, and provides policy rule information and the like to control plane function network elements (for example, an AMF or SMF network element).
8. Application function network element (application function, AF) 1110: configured to support application influence on traffic routing, access a network exposure function network element, or interact with a policy framework for policy control, or the like.

In addition, the foregoing network architecture further includes: a network slice selection function network element (network slice selection function, NSSF), configured to manage information related to network slices; and a network repository function network element (network repository function, NRF), configured to store network function profile of NF entities and their supported services, and support functions such as service discovery and network element entity discovery.

In this network architecture, an N2 interface is an interface between the RAN and the AMF network element, and is for sending a non-access stratum (non-access stratum, NAS) message and the like; an N3 interface is an interface between the RAN and the UPF network element, and is for transmitting user plane data and the like; an N4 interface is an interface between the SMF network element and the UPF network element, and is for transmitting information such as tunnel identification information of an N3 connection, data buffer indication information, and a downlink data notification message.

It may be understood that the foregoing network elements or the functions may be network elements in a hardware device, software functions running on dedicated hardware, or virtualized functions instantiated on a platform (for example, a cloud platform).

For ease of description, the following provides descriptions by using an example in which an access management function network element is an AMF network element, a session management network element is an SMF network element, and a policy control network element is a PCF network element in this application.

Further, the AMF network element is briefly referred to as an AMF, the SMF network element is briefly referred to as an SMF, and the PCF network element is briefly referred to as a PCF. To be specific, in the subsequent descriptions of this application, all AMFs may be replaced with access management function network elements, all SMFs may be replaced with session management network elements, and all PCFs may be replaced with policy control network elements.

For ease of description, in this application, an edge service obtaining method is described by using an example in which an apparatus is an AMF entity, an SMF entity, or a PCF entity. For an implementation method in which the apparatus is a chip in an AMF entity, a chip in an SMF entity, or a chip in a PCF entity, refer to specific descriptions about the method in which the apparatus is the AMF entity, the SMF entity, or the PCF entity. Details are not repeated.

In the network architecture shown in FIG. 1, the UE is connected to the AMF through an N1 interface, the RAN is connected to the AMF through an N2 interface, and the RAN is connected to the UPF through an N3 interface.

UPFs are connected to each other through an N9 interface, and the UPF is interconnected to the data network (data network, DN) through an N6 interface.

The SMF controls the UPF through the N4 interface.

In FIG. 1, N1, N2, N3, N4, and the like are interface sequence numbers. For meanings of these interface sequence numbers, refer to the meanings defined in current standard protocols, which is not limited herein.

It should be understood that the foregoing network architecture applied to embodiments of this application is merely an example of a network architecture described from the perspective of a conventional point-to-point architecture and a service architecture, and a network architecture applicable to embodiments of this application is not limited thereto. Any network architecture that can implement functions of the foregoing network elements is applicable to embodiments of this application.

FIG. 2 is a schematic diagram of a system architecture or a scenario to which an embodiment of this application is applied. The system may also be considered as support for edge computing (edge computing) in the foregoing network architecture.

As shown in FIG. 2, the system architecture includes an edge application server (edge application server, EAS). The EAS is an edge application server deployed in an edge data network (edge data network, EDN), and may also be referred to as an edge application (server), an application instance, an edge application instance, a multi-access edge computing (multi-access edge computing, MEC) application (server), an EAS function, or the like. The edge application may also be referred to as an "application instance", and is specifically an instance (instance) of a server application program (for example, social media software, augmented reality (augmented reality, AR), or virtual reality (virtual reality, VR)) that is deployed and runs in the EDN. One or more EASs may be deployed for one application in one or more EDNs. EASs deployed and running in different EDNs may be considered as different EASs of one application. The EASs may share one domain name, or may use domain names different from that of an application deployed on cloud, where the domain name may be a fully qualified domain name (fully qualified domain name, FQDN); and may use one anycast internet protocol (internet protocol, IP) address, or may use different IP addresses.

The edge data network may be a local (local) data network. The local DN may be identified by a data network access identifier (data network access identifier, DNAI) and a data network name (data network name, DNN), and is a logical network concept.

The system architecture further includes an edge application server discovery function (edge application server discovery function, EASDF) network element. The EASDF may include one or more of the following functions:
registering with an NRF for EASDF discovery and selection; and processing a domain name system (domain name system, DNS) message based on an indication of an SMF, including receiving a DNS message handling rule from the SMF, exchanging a DNS message from UE, and forwarding the DNS message to a central DNS (central DNS, C-DNS) resolver/server (resolver/server) or a local DNS (L-DNS) resolver/server for DNS query. In addition, the EASDF may further establish a user plane connection to a UPF through an N6 interface, to transmit DNS signaling exchanged with the UE. The EASDF can be directly connected to one or more local DNs. A DNS server (resolver/server) may be locally deployed by a 5GC operator or a third party including a local DN, and is configured to resolve a DNS query of the UE to an appropriate EAS IP address in the local DN. The DNS server can be deployed at different locations in the network as a central DNS (C-DNS) server or a local DNS (L-DNS) server. The L-DNS may or may not be connected to the C-DNS, depending on the deployment.

When a terminal device needs to perform service transmission, the SMF may establish a plurality of protocol data unit (protocol data unit, PDU) sessions (sessions) to a same DN or different DNs. When a plurality of PDU sessions to a same DN are established, different UPFs need to be used. The SMF can control PDU data routing so that the PDU sessions can have a plurality of N6 interfaces. A UPF connected to each N6 interface is referred to as a PDU session anchor (PDU session anchor, PSA) UPF. Each PSA provides a different path to the same DN.

For different PDU sessions, the SMF may insert an uplink classifier (uplink classifier, UL CL) into a data transmission path of each PDU session. A function of the UL CL is provided by a UPF, to forward a data packet that meets a service filtering rule to a designated path. When a UL CL is inserted into a data channel of a PDU session, the PDU session may have a plurality of PDU session anchors, providing a plurality of different paths to a same DN. In other words, the function of the UL CL may be transmitting uplink data to different PSAs, and combining downlink data to the UE. Alternatively, data corresponding to all PSAs may be aggregated to a common UPF, and the common UPF has a function of a branching point (branching point, BP). The branching point forwards uplink data to different PSAs in an uplink direction and combines downlink data from PSAs in a downlink direction.

In the system architecture shown in FIG. 2, the UPF (UL CL/BP) may represent a UPF that provides a UL CL function or a common UPF. To be specific, the UPF may transmit uplink data to different PSAs, for example, a UPF (PSA2) and a UPF (PSA1), and combine downlink data to the UE.

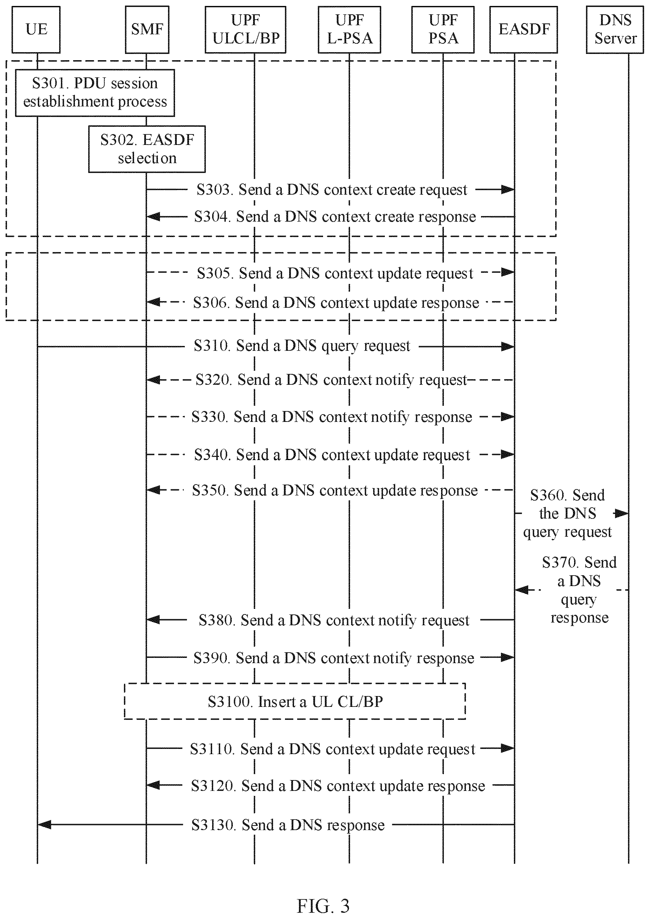

To use an edge application, a terminal device needs to obtain an IP address of an EAS by using a DNS-based service discovery mechanism. As shown in FIG. 3, the terminal device may obtain the IP address of the EAS in the following steps:
S301. Perform a process of establishing a PDU session.

The process of establishing the PDU session includes establishing a session of a user plane path between the UE and a UPF. A specific procedure is in a conventional technology. Details are not described herein.

S302. In the process of establishing the PDU session, an SMF selects an EASDF.

S303. The SMF sends a DNS context create request (Neasdf_DNSContext_Create Request) to the selected EASDF. The DNS context create request may include an IP address of the terminal device, a callback URI, and a DNS message handling rule. The EASDF may create a DNS context for the PDU session based on the request message, and store the IP address of the UE, the callback URI, and the DNS message handling rule in the context.

Correspondingly, in S304, the EASDF sends a DNS context create response to the SMF.

S305. The SMF sends a DNS context update request (Neasdf_DNSContext_UpdateRequest) to the EASDF.

The update request message may be triggered by mobility of the terminal device, or the update request message may be triggered by insertion or removal of a PSA. The update request message may include an EASDF context ID and the DNS message handling rule.

Correspondingly, in S306, the EASDF sends a DNS context update response to the SMF.

S310. The terminal device sends a DNS query message to the EASDF.

S320. If the DNS query message matches the DNS message handling rule that is for reporting, the EASDF sends a DNS message report to the SMF by invoking a DNS context notify request (Neasdf_DNSContext_Notify Request).

S330. The SMF sends a DNS context notify response (Neasdf_DNSContext_Notify Response) to the EASDF.

Optionally, if a DNS message handling rule for an FQDN received in the report needs to be updated, for example, update information is provided to build EDNS client subnet option (EDNS Client Subnet option, ECS) information, in S340, the SMF sends a DNS context update request (Neasdf_DNSContext_Update Request) to the EASDF. The update request may include the DNS message handling rule.

The ECS (EDNS-Client-Subnet) is a new protocol supported by a DNS service. According to this protocol, an IP address of a user is added to a DNS request packet. In this way, the DNS server can return an IP address of a nearer server to the user based on the IP address of the user instead of an IP address of a recursive server, so that the user can access the nearer server.

Correspondingly, in S350, the EASDF sends a DNS context update response (Neasdf_DNSContext_Update Response) to the SMF.

S350. The EASDF handles the received DNS query message.

The EASDF may add an ECS option to the DNS query message, and send the DNS query message to a C-DNS server. Alternatively, the EASDF may send the DNS query message to a local DNS server.

S360. The EASDF sends the DNS query request to the DNS server.

S370. The EASDF receives a DNS response (DNS response) sent by the DNS server.

S380. The EASDF sends a DNS message report to the SMF by triggering a DNS context notify request (Neasdf_DNSContext_Notify request).

S390. The SMF sends a DNS context notify response (Neasdf_DNSContext_Notify Response) to the EASDF.

Optionally, in S3100, the SMF may further insert a UL CL/BP.

Based on EAS information (for example, an EAS IP address) received from the EASDF, the SMF may determine a DNAI and associated N6 traffic routing information of the DNAI. The SMF may perform selection and insertion of the UL CL/BP and a local PSA to complete establishment of a data plane path for the UE.

After the data plane path for the UE is established, in S3110, the SMF may send a DNS context update request (Neasdf_DNSContext_Update Request) including the DNS message handling rule to the EASDF.

Correspondingly, in S3120, the EASDF sends a DNS context update response (Neasdf_DNSContext_Update Response) to the SMF.

S3130. The EASDF sends the DNS response message to the terminal device.

In a current network service, a same edge service may involve more than one FQDN. Therefore, when accessing an edge service, a terminal device simultaneously sends a plurality of DNS query requests, and an EASDF sends a plurality of DNS query requests to a DNS server and receives a plurality of DNS responses. The plurality of DNS responses trigger the EASDF to send a plurality of DNS message reports to an SMF, so that the SMF selects a DNAI and inserts a UL CL/BP. However, because EASs in the returned DNS responses usually belong to a same DN, a waste of signaling resources may be caused if the EASDF sends a plurality of DNS messages to the SMF.

In view of this, this application provides an edge service obtaining method. In the method, a server discovery function network element may determine a specific message sending policy based on indication information, to reduce signaling overheads in obtaining an edge service.

The following describes in detail the method according to embodiments of this application with reference to the accompanying drawings. It should be noted that, in the following process of describing embodiments with reference to the accompanying drawings, the figures are merely for ease of understanding, and shall not constitute any limitation on this application. Names of the network elements are defined only for distinguishing between different functions, and shall not constitute any limitation on this application. This application does not exclude a possibility of defining another network element to implement a same or similar function.

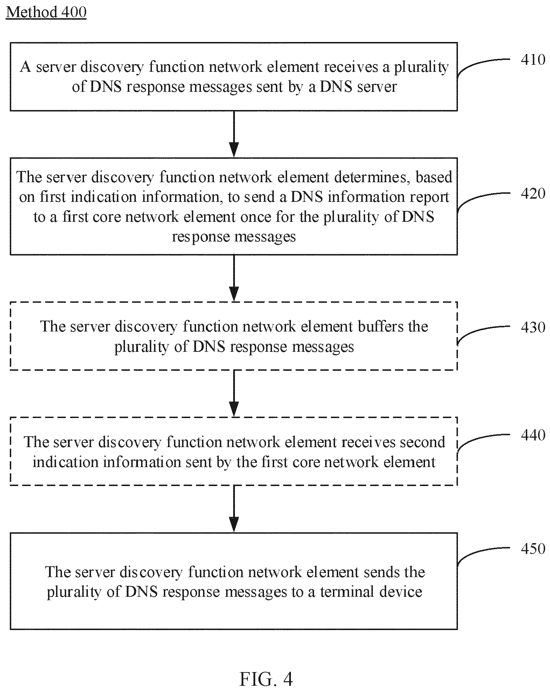

FIG. 4 is a schematic block diagram of an edge service obtaining method 400 according to this application. The method includes at least the following several steps.

S410. A server discovery function network element receives a plurality of DNS response (DNS Response) messages sent by a DNS server.

The server discovery function network element may include an EASDF network element. The plurality of DNS response messages are responses to a plurality of DNS query (DNS Query) request messages sent by a terminal device. The plurality of DNS response messages include address information of EASs to be queried by the terminal device.

The address information of the EASs may include address information of a plurality of EASs for a same edge service, or the address information of the EASs may be address information of a plurality of EASs corresponding to different edge services.

S420. The server discovery function network element determines, based on first indication information, to send a DNS information report to a first core network element once for the plurality of DNS response messages.

That the server discovery function network element determines, based on first indication information, to send a DNS information report to a first core network element once for the plurality of DNS response messages may include: The server discovery function network element reports, to the first core network element based on the first indication information, a DNS information report corresponding to one of the plurality of DNS response messages, where the DNS response messages may include, for example, the 1^{st} DNS response message received by the server discovery function network element. The first core network element may be a session management function network element, and the DNS information report is for triggering the session management function network element to send a handling rule for the plurality of DNS response messages.

The first indication information may include a correspondence between network address information and a data network. For example, the first indication information may include a correspondence table between network address information and identification information of a data network.

The network address information may be an IP address, and the identification information of the data network may include a data network access identifier DNAI and/or a data network name DNN. It should be understood that a same edge service may correspond to identification information of different EASs, and the identification information of the different EASs may correspond to identification information of a same data network. The data network may be a local DN.

It should be noted that the foregoing is merely an example of the identification information, and should not constitute any limitation on this application. This application does not exclude that the identification information may be any other information that can be for obtaining edge server address information.

In a possible implementation, the server discovery function network element receives the plurality of DNS response messages, where the plurality of DNS response messages include the address information of the EASs. The server discovery function network element may determine, based on the address information of the EASs and the correspondence between the network address information and the data network, a data network corresponding to the address information of the EASs. If the address information of the EASs corresponds to a same data network, the server discovery function network element determines to report a DNS information report once for the plurality of DNS response messages.

For example, the first indication information may be configured in the server discovery function network element, or the server discovery function network element may receive the first indication information sent by the first core network element. For example, the server discovery function network element may receive the first indication information in a PDU session establishment process. The server discovery function network element receives a DNS context create request (Neasdf_DNSContext_Create Request) sent by the SMF, where the request message includes the first indication information. Alternatively, the server discovery function network element may receive the first indication information in a DNS context update procedure. For example, the EASDF receives a DNS context update request (Neasdf_DNSContext_Update Request) sent by the SMF, where the update request includes the first indication information. Alternatively, the EASDF may receive the first indication information at any moment before the terminal device sends the DNS query requests.

Optionally, the method may further include S430: The server discovery function network element buffers the plurality of DNS response messages.

The server discovery function network element may buffer the plurality of DNS response messages. Subsequently, the server discovery function network element may determine, based on the DNS handling rule sent by the first core network element, to send all or some of the plurality of DNS response messages to the terminal device.

Optionally, the method may further include S440: The server discovery function network element receives second indication information sent by the first core network element, where the second indication information includes the DNS handling rule for the plurality of DNS response messages.

For example, the DNS handling rule may indicate the server discovery function network element to send the plurality of buffered DNS response messages to the terminal device, or indicate the server discovery function network element to send a DNS response message for a specified EAS address range to the terminal device. Alternatively, the DNS handling rule may indicate the server discovery function network element not to buffer a first DNS response message following the plurality of DNS response messages, where the first DNS response message is also a response to the plurality of DNS query request messages sent by the terminal device. Alternatively, the DNS handling rule may indicate the server discovery function network element to discard a first DNS response message following the plurality of DNS response messages.

S450. The server discovery function network element sends the plurality of DNS response messages to the terminal device.

According to the method provided in this embodiment of this application, the server discovery function network element may receive a plurality of DNS response messages including address information of a plurality of EASs that corresponds to a same data network. The server discovery function network element may determine, based on the first indication information, to send a DNS information report to the first core network element only once for the plurality of DNS response messages. This can reduce signaling overheads generated when the address information of the plurality of EASs is queried.

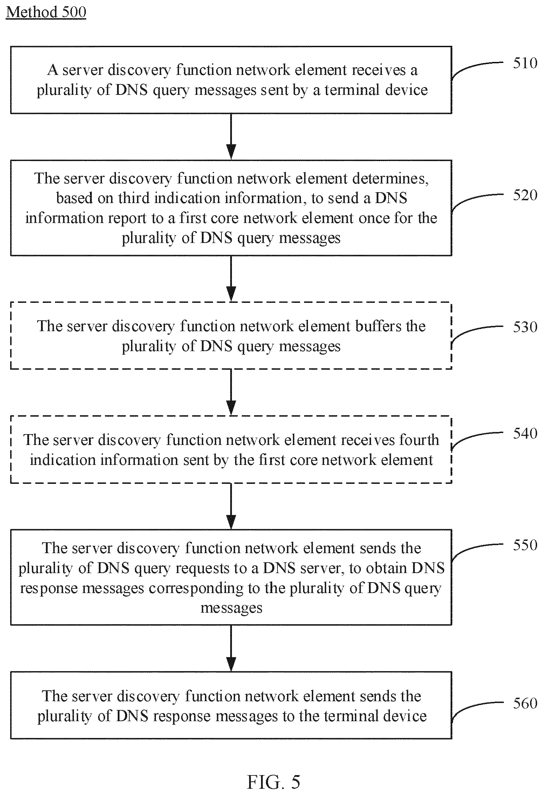

FIG. 5 is a schematic block diagram of an edge service obtaining method 500 according to this application. The method includes at least the following several steps.

S510. A server discovery function network element receives a plurality of DNS query (DNS Query) messages sent by a terminal device.

The plurality of DNS query messages are used by the terminal device to obtain address information of EASs for an edge service. The address information of the EASs may include address information of a plurality of EASs for a same edge service, or the address information of the EASs may be address information of a plurality of EASs corresponding to different edge services.

S520. The server discovery function network element determines, based on third indication information, to send a DNS information report to a first core network element once for the plurality of DNS query messages.

That the server discovery function network element determines, based on third indication information, to send a DNS information report to a first core network element once for the plurality of DNS query messages may include: The server discovery function network element reports, to the first core network element based on the third indication information, a DNS information report corresponding to one of the plurality of DNS query messages, where the DNS query messages may include, for example, the 1^{st} DNS query message received by the server discovery function network element. The first core network element may be a session management function network element, and the DNS information report is for triggering the session management function network element to send a DNS handling rule for the plurality of DNS query messages.

The third indication information may include a correspondence between identification information of EASs and a data network. For example, the third indication information may include a correspondence table between identification information of the EASs and identification information of a data network.

The identification information of the EASs may further include at least one of the following information: uniform resource identifiers (uniform resource identifiers, URIs) of the EASs, instance identifiers (instance IDs) of the EASs, and FQDNs of the EASs. It should be understood that the address information of the EASs may be obtained based on the identification information of the EASs. The identification information of the data network is similar to that in S420. Details are not described herein again.

It should be noted that the foregoing is merely an example of the identification information, and should not constitute any limitation on this application. This application does not exclude that the identification information may be any other information that can be for obtaining edge server address information.

In a possible implementation, the plurality of DNS query messages include identification information of EASs to be queried. The server discovery function network element may determine, based on the identification information of the EASs to be queried and the correspondence between the identification information of the EASs and the data network, a data network corresponding to the identification information of the EASs to be queried. If the identification information of the EASs to be queried corresponds to a same data network, the server discovery function network element determines to report a DNS information report once for the plurality of DNS query messages.

For example, the third indication information may be configured in the server discovery function network element, or the server discovery function network element may receive the third indication information sent by the first core network element. For example, the server discovery function network element may receive the third indication information in a PDU session establishment process. The server discovery function network element receives a DNS context create request (Neasdf_DNSContext_Create Request) sent by the SMF, where the request message includes the third indication information. Alternatively, the server discovery function network element may receive the third indication information in a DNS context update procedure. For example, the EASDF receives a DNS context update request (Neasdf_DNSContext_Update Request) sent by the SMF, where the update request includes the third indication information. Alternatively, the EASDF may receive the third indication information at any moment before the terminal device sends the DNS query messages. In another possible implementation, the third indication information and the foregoing first indication information may be included in same information, for example, first information. The first core network element may send both the first indication information and the third indication information to the server discovery function network element by sending the first information.

Optionally, the method may further include S530: The server discovery function network element buffers the plurality of DNS query messages.

The server discovery function network element may buffer the plurality of DNS query messages. Subsequently, the server discovery function network element may handle the DNS query messages based on the DNS handling rule sent by the first core network element, for example, building EDNS client subnet option information.

Optionally, the method may further include S540: Receive fourth indication information sent by the first core network element, where the fourth indication information includes the DNS handling rule.

S550. The server discovery function network element sends the plurality of DNS query messages to a DNS server, to obtain DNS response messages corresponding to the plurality of DNS query messages, where the DNS response messages include the address information of the EASs to be queried by the terminal device.

S560. The server discovery function network element sends the plurality of DNS response messages to the terminal device.

According to the method provided in this embodiment of this application, the server discovery function network element may receive a plurality of DNS query messages, and the plurality of DNS query messages may correspond to a same data network. The server discovery function network element may determine, based on the third indication information, to send a DNS information report to the first core network element only once for the plurality of DNS query messages. This can reduce signaling overheads generated when address information of the plurality of EASs is queried.

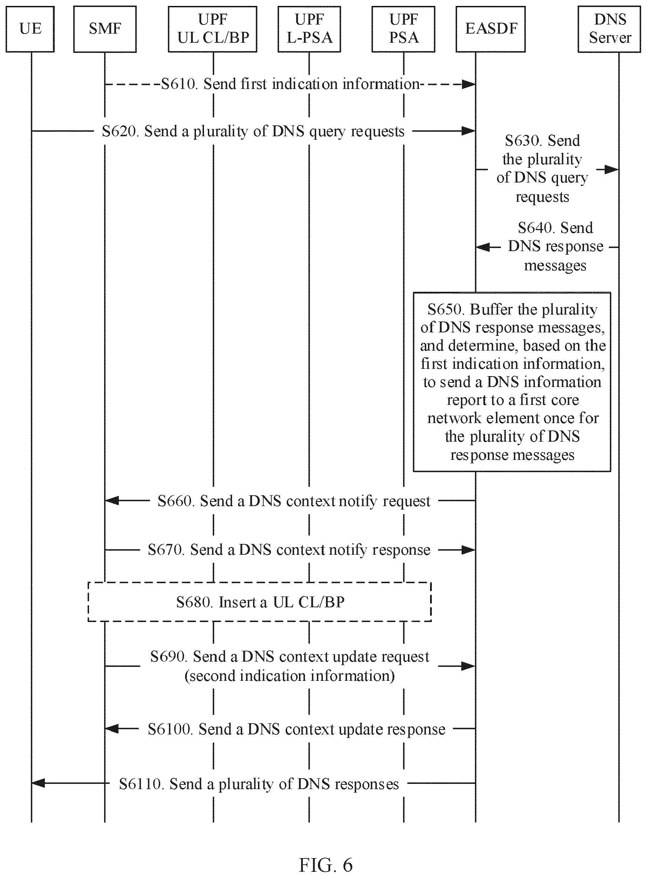

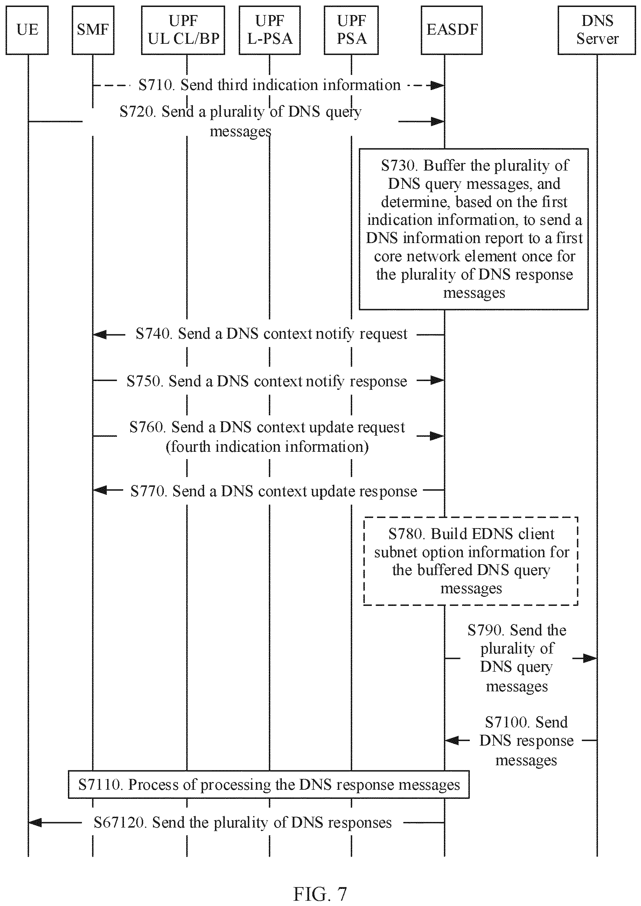

The following describes in detail the edge service obtaining method in embodiments of this application with reference to FIG. 6 and FIG. 7.

FIG. 6 is a schematic flowchart of another edge service obtaining method 600 according to this application. The method 600 shown in FIG. 6 may be performed by the network elements such as the SMF, the EASDF, the UDM (UL CL/BP), and the UDM (PSA) in the system shown in FIG. 1. As shown in FIG. 6, the method includes steps S610 to S6110.

Optionally, in S610, the SMF sends first indication information to the EASDF. Correspondingly, the EASDF receives the first indication information. The first indication information is similar to that in S420. Details are not described herein again.

S620. The EASDF receives a plurality of DNS query messages sent by a terminal device.

The plurality of DNS query messages may be for obtaining address information of EASs corresponding to identification information of a same data network, where the identification information of the data network is similar to that in S420.

S630. The EASDF sends the plurality of DNS query messages to a DNS server.

S640. The EASDF receives DNS response messages that are sent by the DNS server and that respond to the plurality of DNS query messages.

S650. The EASDF buffers the plurality of DNS response messages, and determines, based on the first indication information, to send a DNS information report to a first core network element once for the plurality of DNS response messages.

S660. The EASDF sends a DNS information report (DNS context notify request) to the SMF.

S670. The EASDF receives a response message (DNS context notify response) of the DNS information report.

S680. The SMF establishes a data plane path for the terminal device based on the DNS information report.

S690. The SMF sends second indication information to the EASDF, where the second indication information may include a DNS handling rule.

For example, the SMF may send the second indication information in a DNS context update request (Neasdf_DNSContext_Update Request) message.

The DNS handling rule may be a policy for indicating the server discovery function network element to send the DNS response messages to the terminal device, for example, send the plurality of DNS response messages buffered by the EASDF or send a DNS response message for a specified EAS address range, where the second indication information may include EAS IP address range information, a specified DANI, or a specified FQDN. Alternatively, the DNS handling rule may indicate the server discovery function network element not to buffer a first DNS response message following the plurality of DNS response messages, where the first DNS response message is also a response to the plurality of DNS query messages sent by the terminal device. Alternatively, the DNS handling rule may indicate the server discovery function network element to discard a first DNS response message following the plurality of DNS response messages.

S6100. The SMF receives a response message sent by the EASDF, where the response message may be a DNS context update response (Neasdf_DNSContext_Update Response).

S6110. The EASDF sends the DNS response messages to the terminal device.

FIG. 7 is a schematic flowchart of another edge service obtaining method 700 according to this application. The method 700 shown in FIG. 7 may be performed by the network elements such as the SMF, the EASDF, the UDM (UL CL/BP), and the UDM (PSA) in the system shown in FIG. 1. As shown in FIG. 7, the method includes steps S710 to S7120.

Optionally, in S710, the SMF sends third indication information to the EASDF. Correspondingly, the EASDF receives the third indication information. The third indication information is similar to that in S520. Details are not described herein again.

S720. The EASDF receives a plurality of DNS query messages sent by a terminal device.

The plurality of DNS query messages may be for obtaining address information of EASs corresponding to identification information of a same data network, where the identification information of the data network is similar to that in S420.

S730. The EASDF buffers the plurality of DNS query messages.

S740. The EASDF determines, based on the third indication information, to send a DNS information report (DNS context notify request) to a first core network element for the plurality of DNS query messages.

S750. The EASDF receives a response message (DNS context notify response) of the DNS information report.

S760. The SMF sends fourth indication information to the EASDF, where the fourth indication information may include a DNS handling rule. For example, the DNS handling rule may include building EDNS client subnet option information.

For example, the SMF may send the fourth indication information in a DNS context update request (Neasdf_DNSContext_Update Request) message.

S770. The EASDF receives a DNS context update response (Neasdf_DNSContext_Update Response) message.

Optionally, in S780, the EASDF builds the EDNS client subnet option information for the buffered DNS query messages.

S790. The EASDF sends the plurality of DNS query messages to a DNS server.

S7100. The EASDF receives DNS response messages that are sent by the DNS server and that respond to the plurality of DNS query messages.

S7110. A process of processing the DNS response messages is similar to that in S680.

S7120. The EASDF sends the DNS response messages to the terminal device.

It should be noted that, to clearly describe the technical solutions in embodiments of this application, terms such as "first" and "second" are used in embodiments of this application to distinguish between same items or similar items that have basically same functions and purposes. For example, first information and second information are merely used to distinguish between different information, and do not limit sequences of the first information and the second information. A person skilled in the art may understand that the terms such as "first" and "second" do not limit a quantity or an execution sequence, and that the terms such as "first" and "second" do not indicate a definite difference.

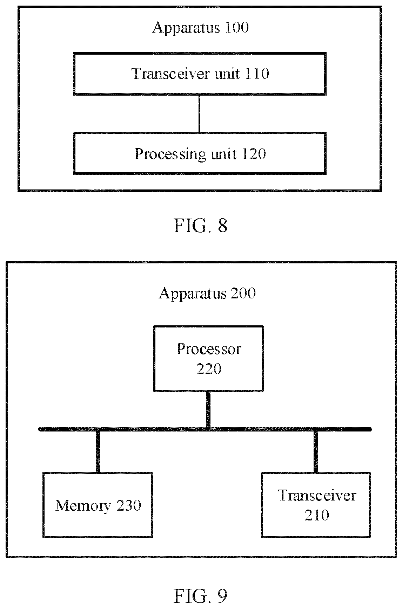

The foregoing describes in detail the edge service obtaining method in embodiments of this application with reference to FIG. 4 to FIG. 7. Apparatuses provided in embodiments of this application are described below with reference to FIG. 8 and FIG. 9. It should be understood that descriptions of apparatus embodiments correspond to the descriptions of the method embodiment. Therefore, for content that is not described in detail, refer to the foregoing method embodiment. For brevity, details are not described herein again.

The foregoing mainly describes the solutions provided in embodiments of this application from a perspective of interaction between nodes. It may be understood that, to implement the foregoing function, each node, such as a terminal device or a network device, includes a corresponding hardware structure and/or software module for performing each function. A person skilled in the art may be aware that, in combination with the examples described in embodiments disclosed in this specification, units and algorithm steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the terminal device or the network device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 8 is a schematic block diagram of an apparatus 100 according to an embodiment of this application. As shown in the figure, the apparatus 100 may include a transceiver unit 110 and a processing unit 120.

In a possible design, the apparatus 100 may be the server discovery function network element in the foregoing method embodiments, or may be a chip configured to implement a function of the server discovery function network element in the foregoing method embodiments. It should be understood that the apparatus 100 may correspond to the server discovery function network element in the method 400, the method 500, the method 600, and the method 700 in embodiments of this application. The apparatus 100 may perform the steps corresponding to the server discovery function network element in the method 400, the method 500, the method 600, and the method 700 in embodiments of this application. It should be understood that a specific process in which the units perform the foregoing corresponding steps is described in detail in the foregoing method embodiments, and for brevity, details are not described herein.

Specifically, the transceiver unit is configured to receive a plurality of DNS response messages sent by a DNS server. The plurality of DNS response messages are responses to a plurality of DNS query (DNS Query) request messages sent by a terminal device, and the plurality of DNS response messages include address information of EASs to be queried by the terminal device.

The address information of the EASs may include address information of a plurality of EASs for a same edge service, or the address information of the EASs may be address information of a plurality of EASs corresponding to different edge services.

The processing unit is configured to determine, based on first indication information, to send a DNS information report to a first core network element once for the plurality of DNS response messages. The first indication information may include a correspondence between network address information and a data network.

Optionally, the apparatus 100 may further include a storage unit 130, configured to buffer the plurality of DNS response messages.

Optionally, the transceiver unit is further configured to receive second indication information sent by the first core network element, where the second indication information includes a DNS handling rule for the plurality of DNS response messages.

The DNS handling rule may indicate the server discovery function network element to send the plurality of buffered DNS response messages to the terminal device, or indicate the server discovery function network element to send a DNS response message for a specified EAS address range to the terminal device. Alternatively, the DNS handling rule may indicate the server discovery function network element not to buffer a first DNS response message following the plurality of DNS response messages, where the first DNS response message is also a response to the plurality of DNS query request messages sent by the terminal device. Alternatively, the DNS handling rule may include indicating the server discovery function network element to discard a first DNS response message following the plurality of DNS response messages.

In a possible design, the apparatus 100 may be the first core network element in the foregoing method embodiments, for example, the SMF, or may be a chip configured to implement a function of the first core network element in the foregoing method embodiments. It should be understood that the apparatus 100 may perform the steps corresponding to the first core network element in the method 400, the method 500, the method 600, and the method 700 in embodiments of this application. It should be understood that a specific process in which the units perform the foregoing corresponding steps is described in detail in the foregoing method embodiments, and for brevity, details are not described herein.

FIG. 9 is a schematic block diagram of an apparatus 200 according to an embodiment of this application. As shown in the figure, the apparatus 200 includes at least one processor 220. The processor 220 is coupled to a memory, and is configured to execute instructions stored in the memory, to send a signal and/or receive a signal. Optionally, the apparatus 200 further includes the memory 230, configured to store instructions. Optionally, the apparatus 200 further includes a transceiver 210, and the processor 220 controls the transceiver 210 to send a signal and/or receive a signal.

It should be understood that the processor 220 and the memory 230 may be integrated into one processing apparatus. The processor 220 is configured to execute program code stored in the memory 230 to implement the foregoing functions. During specific implementation, the memory 230 may alternatively be integrated into the processor 220, or may be independent of the processor 220.

It should be further understood that the transceiver 210 may include a receiver (or referred to as a receiver machine) and a transmitter (or referred to as a transmitter machine). The transceiver may further include an antenna. There may be one or more antennas. The transceiver 210 may be a communication interface or an interface circuit.

Specifically, the transceiver 210 in the apparatus 200 may correspond to the transceiver unit 110 in the apparatus 100, and the processor 220 in the apparatus 200 may correspond to the processing unit 120 in the apparatus 200.

It should be understood that a specific process in which the transceiver and the processor perform the foregoing corresponding steps is described in detail in the foregoing method embodiments, and for brevity, details are not described herein.

In an implementation process, steps in the foregoing methods can be implemented by using a hardware integrated logical circuit in the processor, or by using instructions in a form of software. The steps of the methods disclosed with reference to embodiments of this application may be directly performed and accomplished by a hardware processor, or may be performed and accomplished by using a combination of hardware and software modules in the processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed and accomplished by a hardware decoding processor, or may be performed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), and a direct rambus dynamic random access memory (direct rambus RAM, DR RAM). It should be noted that the memory of the systems and methods described in this specification includes but is not limited to these and any memory of another proper type.

According to the methods provided in embodiments of this application, this application further provides a computer program product. The computer program product store compute program code. When the computer program code is run on a computer, the computer is enabled to perform a method in any one of the embodiments of the method 300, the method 400, and the method 500.

According to the methods provided in embodiments of this application, this application further provides a computer-readable medium. The computer-readable medium stores program code. When the program code is run on a computer, the computer is enabled to perform a method in any one of the embodiments of the method 300, the method 400, and the method 500.

According to the methods provided in embodiments of this application, this application further provides a system. The system includes the foregoing apparatus or device.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

The network side device and the terminal device in the foregoing apparatus embodiments correspond to the network side device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An edge service obtaining method, comprising:
receiving, by a server discovery function network element, a plurality of domain name system DNS response messages from a DNS server, wherein the plurality of DNS response messages comprises address information of edge application servers EASs, to be queried by a terminal device, and the address information of the EASs in the plurality of DNS response messages corresponds to a same data network; and
determining, by the server discovery function network element based on first indication information, to send a DNS information report to a first core network element once for the plurality of DNS response messages.

2. The method according to claim 1, wherein the determining, by the server discovery function network element based on first indication information, to send a DNS information report to a first core network element once for the plurality of DNS response messages comprises:
reporting, by the server discovery function network element to the first core network element once, a DNS information report corresponding to one of the plurality of DNS response messages.

3. The method according to claim 1 or 2, wherein the first indication information comprises correspondence information between a network address and identification information of a data network; and the determining, by the server discovery function network element based on first indication information, to send a DNS information report to a first core network element once for the plurality of DNS response messages comprises:
determining, by the server discovery function network element based on the first indication information and the address information of the EASs in the plurality of DNS response messages, that the EASs to be queried correspond to same data network identification information; and
reporting, by the server discovery function network element to the first core network element once, a DNS information report corresponding to one of the plurality of DNS response messages.

4. The method according to any one of claims 1 to 3, wherein the method further comprises:
buffering, by the server discovery function network element, the plurality of DNS response messages;
receiving, by the server discovery function network element, second indication information from the first core network element, wherein the second indication information comprises a handling rule for the plurality of DNS response messages; and
sending, by the server discovery function network element, the plurality of DNS response messages to the terminal device based on the second indication information.

5. The method according to any one of claims 1 to 4, wherein before the receiving, by a server discovery function network element, a plurality of DNS response messages from a DNS server, the method further comprises:
receiving, by the server discovery function network element, the first indication information from the first core network element.

6. The method according to any one of claims 1 to 5, wherein the first core network element is a session management function network element.

7. The method according to any one of claims 1 to 6, wherein the identification information of the data network comprises at least one of the following information:
a data network access identifier DNAI of the data network and a data network name DNN of the data network.

8. An edge service obtaining method, comprising:
sending, by a first core network element, first indication information to a server discovery function network element, wherein the first indication information indicates the server discovery function network element to send a domain name system DNS information report to the first core network element once for a plurality of DNS response messages, the plurality of DNS response messages comprise address information of edge application servers EASs to be queried by a terminal device, and the address information of the EASs in the plurality of DNS response messages corresponds to a same data network; and
receiving, by the first core network element, the DNS information report.

9. The method according to claim 8, wherein the DNS information report is a DNS information report corresponding to one of the plurality of DNS response messages.

10. The method according to claim 8 or 9, wherein the first core network element is a session management function network element.

11. The method according to any one of claims 8 to 10, wherein the first indication information comprises correspondence information between a network address and identification information of a data network.

12. The method according to any one of claims 8 to 11, wherein after the receiving, by the first core network element, the DNS information report, the method further comprises:
sending, by the first core network element, second indication information to the server discovery function network element, wherein the second indication information comprises a handling rule for the plurality of DNS response messages, and the handling rule indicates the server discovery function network element to send the plurality of buffered DNS response messages to the terminal device.

13. The method according to any one of claims 8 to 12, wherein the identification information of the data network comprises at least one of the following information:
a data network access identifier DNAI of the data network and a data network name DNN of the data network.

14. An edge service obtaining method, comprising:
receiving, by a server discovery function network element, a plurality of domain name system DNS query messages from a terminal device, wherein the plurality of DNS query messages is for querying address information of EASs, the plurality of DNS query messages comprises identification information of the edge application servers EASs, and the identification information of the EASs corresponds to a same data network; and
determining, by the server discovery function network element based on third indication information, to send a DNS information report to a first core network element once for the plurality of DNS query messages.

15. The method according to claim 14, wherein the third indication information comprises correspondence information between the identification information of the EASs and identification information of a data network; and the determining, by the server discovery function network element based on third indication information, to send a DNS information report to a first core network element once for the plurality of DNS query messages comprises:
determining, by the server discovery function network element based on the third indication information, that the plurality of DNS query messages correspond to same data network identification information; and
reporting, by the server discovery function network element to the first core network element once, a DNS information report corresponding to one of the plurality of DNS query messages.

16. The method according to claim 15, wherein the method further comprises:
buffering, by the server discovery function network element, the plurality of DNS query messages;
receiving, by the server discovery function network element, fourth indication information from the first core network element, wherein the fourth indication information comprises a handling rule for the plurality of DNS query messages; and
determining, by the server discovery function network element based on the fourth indication information, to send the plurality of DNS query messages to a DNS server.

17. The method according to any one of claims 14 to 16, wherein before the receiving, by a server discovery function network element, a plurality of DNS query messages from a terminal device, the method further comprises:
receiving, by the server discovery function network element, the third indication information from the first core network element.

18. The method according to any one of claims 15 to 17, wherein the identification information of the EASs comprises at least one of the following information:
uniform resource identifiers URIs of the EASs, instance identifiers of the EASs, and fully qualified domain names FQDNs of the EASs.

19. The method according to any one of claims 15 to 18, wherein the identification information of the data network comprises at least one of the following information:
a data network access identifier DNAI and a data network name DNN.

20. An edge service obtaining method, comprising:
sending, by a first core network element, third indication information to a server discovery function network element, wherein the third indication information indicates the server discovery function network element to send a domain name system DNS information report to the first core network element once for a plurality of DNS query messages, the plurality of DNS query messages are for querying address information of edge application servers EASs, the plurality of DNS query messages comprise identification information of the EASs, and the identification information of the EASs corresponds to a same data network; and
receiving, by the first core network element, the DNS information report.

21. The method according to claim 20, wherein the third indication information comprises correspondence information between the identification information of the EASs and identification information of a data network.

22. The method according to claim 20 or 21, wherein after the receiving, by the first core network element, the DNS information report, the method further comprises:
sending, by the first core network element, fourth indication information to the server discovery function network element, wherein the fourth indication information comprises a handling rule for the plurality of DNS query messages, and the handling rule comprises building a client subnet option for the plurality of DNS query messages.

23. The method according to any one of claims 20 to 22, wherein the identification information of the EASs comprises at least one of the following information:
uniform resource identifiers URIs of the EASs, instance identifiers of the EASs, and fully qualified domain names FQDNs of the EASs.

24. The method according to any one of claims 20 to 23, wherein the identification information of the data network comprises at least one of the following information:
a data network access identifier DNAI and a data network name DNN.

25. An edge service obtaining apparatus, comprising:
a processor, wherein the processor is coupled to a memory, and the memory is configured to store a program or instructions, wherein when the program or the instructions are executed by the processor, the apparatus is enabled to perform the method according to any one of claims 1 to 7, the apparatus is enabled to perform the method according to any one of claims 8 to 13, the apparatus is enabled to perform the method according to any one of claims 14 to 19, or the apparatus is enabled to perform the method according to any one of claims 20 to 24.

26. A server discovery function network element, comprising:
a processor and a memory, wherein
the memory is configured to store a program or instructions; and when the program or the instructions are executed by the processor, the server discovery function network element is enabled to perform the method according to any one of claims 1 to 7, or the server discovery function network element is enabled to perform the method according to any one of claims 14 to 19.

27. A core network element, comprising:
a processor and a memory, wherein
the memory is configured to store a program or instructions; and when the program or the instructions are executed by the processor, the core network element is enabled to perform the method according to any one of claims 8 to 13, or the core network element is enabled to perform the method according to any one of claims 20 to 24.

28. A chip system, comprising:
a memory, configured to store a computer program; and
a processor, configured to invoke the computer program from the memory and run the computer program, so that a device on which the chip system is installed performs the method according to any one of claims 1 to 7, any one of claims 8 to 13, any one of claims 14 to 19, or any one of claims 20 to 24.

29. A computer-readable storage medium, comprising a computer program, wherein when the computer program is run on a computer, the computer is enabled to perform the method according to any one of claims 1 to 7, any one of claims 8 to 13, any one of claims 14 to 19, or any one of claims 20 to 24.

30. A communication system, comprising a server discovery function network element and a first core network element, wherein the server discovery function network element is configured to perform the method according to any one of claims 1 to 7, and the first core network element is configured to perform the method according to any one of claims 8 to 13.

31. The system according to claim 30, further comprising:
a domain name system DNS server, configured to send a plurality of DNS response messages to the server discovery function network element.

32. An edge service obtaining method, comprising:
receiving, by a server discovery function network element, a plurality of domain name system DNS response messages from a DNS server, wherein the plurality of DNS response messages comprises address information of edge application servers EASs to be queried by a terminal device, and the address information of the EASs in the plurality of DNS response messages corresponds to a same data network;
determining, by the server discovery function network element based on first indication information, to send a DNS information report to a first core network element once for the plurality of DNS response messages; and
receiving, by the first core network element, the DNS information report.

33. The method according to claim 32, wherein the method further comprises:
sending, by the first core network element, the first indication information to the server discovery function network element, wherein the first indication information indicates the server discovery function network element to send the DNS information report to the first core network element once for the plurality of DNS response messages; and
receiving, by the server discovery function network element, the first indication information from the first core network element.

34. The method according to claim 32 or 33, wherein the determining, by the server discovery function network element based on first indication information, to send a DNS information report to a first core network element once for the plurality of DNS response messages comprises:
reporting, by the server discovery function network element to the first core network element once, a DNS information report corresponding to one of the plurality of DNS response messages.

35. The method according to any one of claims 32 to 34, wherein the method further comprises:
buffering, by the server discovery function network element, the plurality of DNS response messages;
sending, by the first core network element, second indication information to the server discovery function network element, wherein the second indication information comprises a handling rule for the plurality of DNS response messages;
receiving, by the server discovery function network element, the second indication information from the first core network element; and
sending, by the server discovery function network element, the plurality of DNS response messages to the terminal device based on the second indication information.

36. The method according to any one of claims 32 to 35, wherein the first core network element is a session management function network element.

37. The method according to any one of claims 32 to 36, wherein the method further comprises:
sending, by the DNS server, the plurality of DNS response messages to the server discovery function network element.

38. An edge service obtaining apparatus, comprising one or more functional units, configured to perform the method according to any one of claims 1 to 7.

39. An edge service obtaining apparatus, comprising one or more functional units, configured to perform the method according to any one of claims 8 to 13.
